(19) Europäisches Patentamt / European Patent Office / Office européen des brevets

(11) **EP 2 842 075 B1**

(12) **EUROPEAN PATENT SPECIFICATION**

(45) Date of publication and mention
of the grant of the patent:
**03.01.2018 Bulletin 2018/01**

(21) Application number: **13781046.1**

(22) Date of filing: **22.04.2013**

(51) Int Cl.:
***G06K 9/00*** *(2006.01)*

(86) International application number:
**PCT/CN2013/074511**

(87) International publication number:
**WO 2013/159686 (31.10.2013 Gazette 2013/44)**

(54) **THREE-DIMENSIONAL FACE RECOGNITION FOR MOBILE DEVICES**

DREIDIMENSIONALE GESICHTSERKENNUNG FÜR MOBILE VORRICHTUNGEN

RECONNAISSANCE FACIALE TRIDIMENSIONNELLE POUR DISPOSITIFS MOBILES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.04.2012 US 201213456074**

(43) Date of publication of application:
**04.03.2015 Bulletin 2015/10**

(73) Proprietor: **Huawei Technologies Co., Ltd.
Longgang District
Shenzhen, Guangdong 518129 (CN)**

(72) Inventors:
• **LV, Fengjun
Sunnyvale, California 94086 (US)**
• **KALKER, Ton
Mountain View, California 94040 (US)**

(74) Representative: **Thun, Clemens
Mitscherlich PartmbB
Patent- und Rechtsanwälte
Sonnenstraße 33
80331 München (DE)**

(56) References cited:
EP-A2- 2 137 670          CN-A- 101 377 814
CN-A- 101 395 613         US-A1- 2003 072 474
US-A1- 2007 116 457       US-A1- 2009 279 784
US-A1- 2011 150 300       US-A1- 2012 027 270
US-B1- 6 522 787

• **DOUGLAS FIDALEO ET AL: "Model-Assisted 3D Face Reconstruction from Video", 20 October 2007 (2007-10-20), ANALYSIS AND MODELING OF FACES AND GESTURES; [LECTURE NOTES IN COMPUTER SCIENCE], SPRINGER BERLIN HEIDELBERG, BERLIN, HEIDELBERG, PAGE(S) 124 - 138, XP019081553, ISBN: 978-3-540-75689-7 * figure 1 * * section 4.1, paragraph 4, sentence 1; figure 2 * * section 4.1, paragraph 4, sentence 2 * * section 4.4, paragraph 3 * * section 3, last sentence ***
• **RITA WONG ET AL: "Interactive quality-driven feedback for biometric systems", BIOMETRICS: THEORY APPLICATIONS AND SYSTEMS (BTAS), 2010 FOURTH IEEE INTERNATIONAL CONFERENCE ON, IEEE, PISCATAWAY, NJ, USA, 27 September 2010 (2010-09-27), pages 1-7, XP031800505, ISBN: 978-1-4244-7581-0**
• **MARTIN LABRIE ET AL: "Efficient camera motion and 3D recovery using an inertial sensor", COMPUTER AND ROBOT VISION, 2007. CRV '07. FOURTH CANADIAN CONFERE NCE ON, IEEE, PI, 1 May 2007 (2007-05-01), pages 55-62, XP031175788, ISBN: 978-0-7695-2786-4**
• **KANADE T ET AL: "Real-time and 3D vision for autonomous small and micro air vehicles", 43RD IEEE CONFERENCE ON DECISION AND CONTROL; DECEMBER 14-17, 2004; ATLANTIS, PARADISE ISLAND, BAHAMAS, IEEE, PISCATAWAY, NJ, USA, vol. 2, 14 December 2004 (2004-12-14), page 1655, XP010794491, ISBN: 978-0-7803-8682-2**

**(Cont. next page)**

- Richard Hartley ET AL: "Chapter 18.5.1: Direct solution for structure and translation" In: "Multiple View Geometry in Computer Vision", 4 April 2004 (2004-04-04), Cambridge University Press, XP055184367, ISBN: 978-0-52-154051-3 pages 448-449, * the whole document *
- Alvin Ybañez: "FaceLock Android App Review: Locking down your phone apps and unlocking with your face", , 20 April 2012 (2012-04-20), XP055262225, Retrieved from the Internet: URL:http://web.archive.org/web/20120420050 006/http://www.androidauthority.com/facelo ck-app-review-75802 [retrieved on 2016-04-01]
- GONG S ET AL: "Dynamic Vision: From Images to Face recognition, Databases", 1 January 2000 (2000-01-01), DYNAMIC VISION : FROM IMAGES TO FACE RECOGNITION, LONDON : IMPERIAL COLLEGE PRESS, GB, PAGE(S) 267 - 280, XP002614932, ISBN: 978-1-86094-181-8 * figure A.1 and page 270, second paragraph; page 271, first paragraph; section A2.2, first paragraph *
- SIMON CLIPPINGDALE ET AL: "Partial automation of database acquisition in the FAVRET face tracking and recognition system using a bootstrap approach", IAPR WORKSHOP ON MACHINE VISION APPLICATIONS, 30 November 2000 (2000-11-30), XP055027899, Tokyo, Japan
- Anonymous: "Accelerometer - Wikipedia", , 21 April 2012 (2012-04-21), XP055324902, Retrieved from the Internet: URL:https://en.wikipedia.org/w/index.php?t itle=Accelerometer&oldid=488513625#Consume r_electronics [retrieved on 2016-11-30]
- MEDIONI G ET AL: "Generation of a 3-D face model from one camera", PATTERN RECOGNITION, 2002. PROCEEDINGS. 16TH INTERNATIONAL CONFERENCE ON QUEBEC CITY, QUE., CANADA 11-15 AUG. 2002, LOS ALAMITOS, CA, USA,IEEE COMPUT. SOC, US, vol. 3, 11 August 2002 (2002-08-11), pages 667-671, XP010613713, DOI: 10.1109/ICPR.2002.1048027 ISBN: 978-0-7695-1695-0

**Description**

**BACKGROUND**

**Field**

This disclosure is generally related to using face-recognition to identify or authenticate a user. More specifically, this disclosure is related to using a mobile device that includes an image sensor and a motion sensor to generate a three-dimensional model of a user's face.

**Related Art**

Nowadays users can use mobile devices, such as a smartphone, to perform their computing tasks while on the go. They can check their bank account balances while shopping at a local store, compare merchandise prices with their favorite online retailers, and even purchase items online from their mobile device. Users also oftentimes use their mobile devices to interact with their friends and colleagues, regardless of where they are, for example, by collaborating in on-line games or by communicating with their friends via an online social network.

Face recognition can provide the most effective and natural way to identify and/or authenticate a user if it is implemented properly. However, two dimensional (2-D) image-based face recognition is prone to errors caused by variations in ambient lighting or variations in the user's pose, expression, make-up and aging. The effectiveness of 2-D image-based face recognition is also limited by how easy it can be for others to deceive it by capturing an image of a printed picture of a privileged user. Further, while three-dimensional (3-D) image-based face recognition can be more secure, it is typically implemented using stereoscopic image-capture devices that use multiple cameras, which is not often found on mobile devices. Moreover, typical 3-D image-based face recognition involves performing complicated computations that are too computationally expensive for a mobile computing device.

DOUGLAS FIDALEO ET AL:"Model-Assisted 3D Face Reconstruction from Video", XP019081553, ISBN:978-3-540-75689-7 describes a model-assisted system for reconstruction of 3D faces from a single consumer quality camera using a structure from motion approach.

EP 2 137 670 A2 discloses a face illumination normalization method that includes acquiring a digital image including a face that appears to be illuminated unevenly.

RITA WONG ET AL:"Interactive quality-driven feedback for biometric systems", XP 031800505, ISBN: 978-1-4244-7581-0 discloses a guideline to design an interactive quality-driven feedback mechanism.

Alvin Ybanez: "FaceLock Android App Review: Locking down your phone apps and unlocking with your face", XP055262225, discloses a face locking function and discloses that a person can take different pictures of your face to enable the device to remember your face.

**SUMMARY**

One aspect provides a mobile device that generates a three-dimensional model of a person's face by capturing and processing a set of two-dimensional images. During operation, the device uses an image-capture device to capture a set of images of a person's face from various orientations as the person or any another user sweeps the mobile device across the person's face. The device determines orientation information for the captured images, and detects a plurality of features of the person's face from the captured images, wherein the determining comprises: capturing, by a motion sensor of the device, orientation information of the device at the time each one of the set of images is captured, and storing the orientation information along with the captured image. The device then generates a three-dimensional model of the person's face from the detected features and their orientation information. The three-dimensional model of the person's face facilitates identifying and/or authenticating the person's identity. To capture the set of images, the device monitors a change in orientation of the mobile device. The device determines whether the orientation has changed by at least a minimum amount from an orientation of a previous captured image, and determines whether the mobile device is stabilized. The device captures an image in response to determining that the orientation has changed by at least a minimum amount and that the mobile device is stabilized. The device then stores the captured image in response to determining that the image is suitable for detecting facial features of the person. While capturing the set of images, the device provides a notification to the person or any other user in response to determining that the mobile device is not stabilized or determining that no more images need to be captured. The device can also provide a notification in response to determining that the person's face is not in the image frame, or determining that the current orientation of the device is not suitable for detecting features of the person's face.

In some implementations, the notification includes one or more of: a sound; a vibration pattern; a flashing pattern from a light source of the mobile device; and a displayed image on a screen of the mobile.

In some implementations, the device captures the set of images in response to receiving a request to register the person as auser. The device then stores the three-dimensional model in association with a user profile of the person.

In some implementations, the device captures the set of images in response to receiving a request to authenticate the person, and uses the generated three-dimensional model to authenticate the person.

In a variation on these implementations, the device authenticates the person by determining whether the generated three-dimensional model of the person matches a stored three-dimensional model of a registered user.

In a variation on these implementations, while authenticating the person, the device sends the generated three-dimensional model of the person to a remote authentication device, and receives an authentication response which indicates whether the person is a registered user, access privileges for the person, and/or identifying profile information for the person.

In some implementations, the device captures the set of images in response to receiving a request to generate an avatar for the person. The device then generates an avatar for the person, such that the avatar's face is generated based on the three-dimensional model of the person.

## BRIEF DESCRIPTION OF THE FIGURES

FIG. 1 illustrates an exemplary application for an image-capture device in accordance with an embodiment.

FIG. 2 presents a flow chart illustrating a process for generating and using a three-dimensional model of a local user's face in accordance with an embodiment.

FIG. 3 illustrates a plurality of detected facial features from a two-dimensional image in accordance with an embodiment.

FIG. 4 presents a flow chart illustrating a method for capturing a set of images of a local user in accordance with an embodiment.

FIG. 5A illustrates a motion trajectory of an image-capture device during an image capture operation in accordance with an embodiment.

FIG. 5B illustrates modeling data that is computed while generating the three-dimensional model of the local user in accordance with an embodiment.

FIG. 6 illustrates a normalized three-dimensional model of a user's face in accordance with an embodiment.

FIG. 7 illustrates an exemplary apparatus that facilitates generating a three-dimensional model of a local user in accordance with an embodiment.

FIG. 8 illustrates an exemplary computer system that facilitates generating a three-dimensional model of a local user in accordance with an embodiment.

In the figures, like reference numerals refer to the same figure elements.

## DETAILED DESCRIPTION

The following description is presented to enable any person skilled in the art to make and use the embodiments, and is provided in the context of a particular application and its requirements. Various modifications to the disclosed embodiments will be readily apparent to those skilled in the art, and the general principles defined herein may be applied to other embodiments and applications without departing from the spirit and scope of the present disclosure. Thus, the present invention is not limited to the embodiments shown, but is to be accorded the widest scope consistent with the principles and features disclosed herein.

### Overview

Embodiments of the present invention provide an image-capture device that solves the problem of generating a three-dimensional model of a user's face using a single camera. The device can use an on-board motion sensor, such as a gyroscope, while capturing multiple images of the user from various viewpoints to monitor position and orientation information about the individual images. The device uses this position and orientation information to generate the three-dimensional model of the user's face, and can use this three-dimensional model to identify or authenticate the user when the user requests access to the device or other restricted resources.

For example, smartphones typically include at least one camera facing a certain direction, such as a front-facing camera and/or a rear-facing camera. When the user attempts to access the smartphone device, the user can be asked to sweep the device's camera in front his/her face from one side to the opposing side so that the device can capture images of his/her face from various angles and viewpoints. The device can also use the on-board motion sensor and its face-detection capabilities to determine the right moments to capture an image as the user sweeps the device in front of his/her face, and can inform the user if the user is performing the sweeping motion incorrectly. When the device does capture an image, the device uses the on-board motion sensor to capture motion or orientation information of the device at the time the image was captured, and stores this information along with the captured image.

The device analyzes these captured images to detect position information on the images for certain facial features, and uses the device motion or orientation information to efficiently compute the 3-D position of these features and generates a corresponding three-dimensional facial model for the user. Once the device generates the three-dimensional model, the device can normalize the scale and orientation of the model with respect to a global coordinate system, which facilitates comparing the user's three-dimensional model directly with other stored model(s) (e.g., to identify the user).

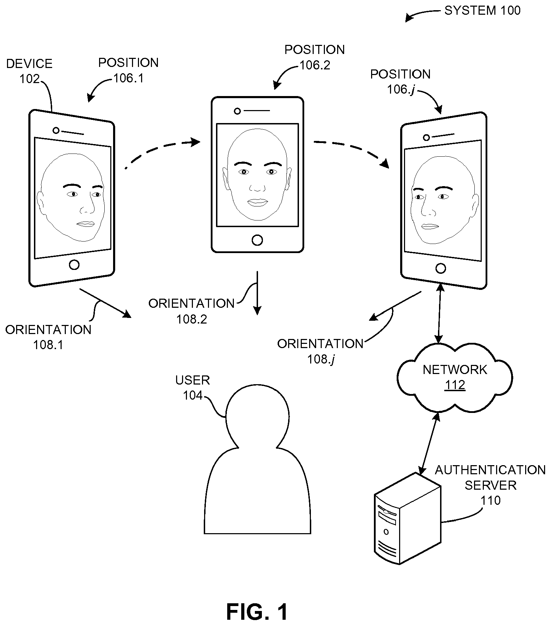

FIG. 1 illustrates an exemplary application for an image-capture device 102 in accordance with an embodiment. Image-capture device 102 can include any computing device that includes a digital camera and a motion sensor (e.g., a gyroscope, a compass, an accelerometer, etc.). For example, image-capture device 102 can include a smartphone that includes a display, a digital camera (e.g., a front-facing or rear-facing camera), a storage device, and a communication device for interfacing with other devices (e.g., via a network 112). Device 102 can use the on-board camera and motion sensor to generate a three-dimensional model of user 104 using a single camera, and can use the three-dimensional model to identify or authenticate user 104.

In some embodiments, user 104 can create or update a user profile for accessing device 102 (or a remote device such as server 110) without having to manually enter a passcode. To create or update the user profile, device 102 generates a three-dimensional model of user 104, and can use this three-dimensional model to identify or authenticate user 104. Device 102 can allow user 104 to create multiple three-dimensional models, which can improve the likelihood that device 102 recognizes user 104.

When device 102 is ready to generate the three-dimensional model, device 102 instructs user 104 to sweep device 102 across his/her face to capture his/her face from various positions and orientations (e.g., positions 106.1, 106.2 and 106.*j*). User 104 then uses device 102 to capture images of his/her face by holding device 102 with a single hand so that an on-board camera is aimed at his/her face, and steadily changes the position and orientation of device 102 until the on-board camera has captured a sufficient number of images of user 104. The image-capturing procedure is continuous and automatic, such that user 104 does not need to manually press a shutter button, and does not need to be concerned about whether the captured images are motion-blurred, whether the face is out of sight, etc.

In some embodiments, device 102 ensures that it captures quality images that capture facial features of user 104 by using the motion sensor and the face-detection capabilities to determine the moments that result in the best pictures, and can notify 104 of any problems during the image-capture procedure. Device 102 uses these images and their orientation to generate the three-dimensional model of user 104, for example, by determining the position in the three-dimensional model for the facial features detected in the captured images.

If user 104 has a registered user profile, user 104 can use the face recognition capability of device 102, without having to manually enter a passcode. User 104 can also use device 102 to gain access to other restricted resources, such as software or data, a computer system, or a secured room. For example, server 110 may store profile information for a set of users that have access to the restricted resource. Device 102 may be a trusted resource that interacts with server 110 to communicate the three-dimensional model of user 104 to server 110. If server 110 determines that the three-dimensional model matches that of a trusted user, server 110 can grant user 104 access to the trusted resource. Otherwise, server 110 can deny user 104 from accessing the trusted resource.

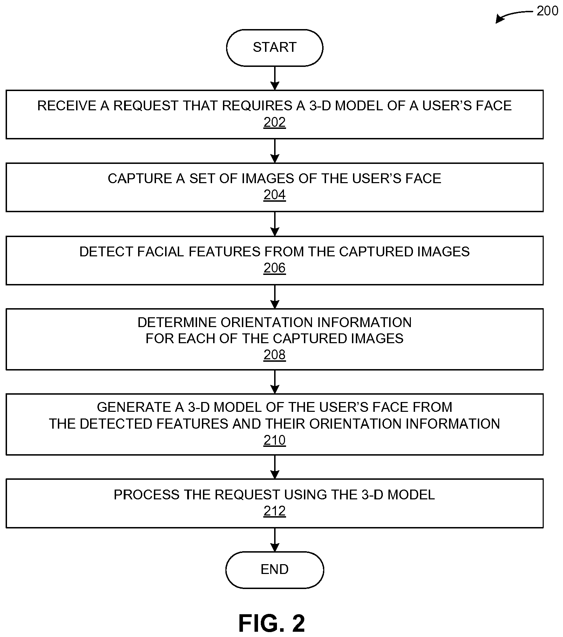

FIG. 2 presents a flow chart illustrating a process for generating and using a three-dimensional model of a local user's face in accordance with an embodiment. During operation, the image-capture device can receive a request that requires a three-dimensional model of the local user's face (operation 202). The request can include, for example, a command to register a user profile that includes a three-dimensional model of the local user's face, or a request to identify or authenticate the local user using a three-dimensional model of the user's face. The request can also include other commands that require a model of the local user's face, such as to generate a three-dimensional avatar for the local user.

To generate the three-dimensional model, the device captures a set of images of the local user's face (operation 204), and processes the captured images to detect facial features of the local user (operation 206). The device then determines orientation information for each captured image (operation 208), and generates the three-dimensional model of the user's face from the orientation information for the captured images and the image coordinates of the detected features (operation 210).

During operation 206, the device detects a set of predefined facial feature points, such as points along the contour of the eyebrows, the eyes, the nose, the jawline, and the mouth. The device can use the position of each feature point that occurs in several different images during operation 210 to compute, using projective geometry, a position for this feature point in the three-dimensional model.

The device then processes the request using the three-dimensional model of the user's face (operation 212).

In some embodiments, the request can include a command to register the local user, for example, by creating a user profile that includes the three-dimensional model of the local user. The device performs the command by storing the three-dimensional model and a profile of the local user in a local profile repository, and can also provide the three-dimensional model and the local user's profile to a remote authentication system.

In some embodiments, the request can include a request to identify the local user, at which point the device processes the request by searching for a user profile whose three-dimensional model matches that of the local user. If the device finds a closest match that has a high confidence value, the device provides the identity of the closest match as the user's identity. Otherwise, the device provides a result indicating that the local user is not recognized.

In some embodiments, the device stores the three-dimensional models of various registered user profiles in a local repository, and searches for the local user's profile by comparing the three-dimensional model of the local user to the stored models associated with the registered user profiles. The device can also search for the local user's profile by sending the three-dimensional model of the local user to the remote authentication system, and receiving an authentication response from the authentication system. If the authentication system recognizes the local user, the authentication response can indicate the identity of the local user, access privileges for the local user, and/or the local user's profile information. In some embodiments, the request from operation 202 can include a command to generate an avatar for the local user, at which point the device processes the command to generate the avatar for the local user from the generated three-dimensional model. The avatar can include a pre-designed body and costume (e.g., selected or designed by the local user), and can include facial features that match features from the three-dimensional model of the local user's face. For example, the look and texture of these facial features can be selected from a pre-designed feature repository based on the three-dimensional model of the local user's face, and their placement on the avatar's face can also be determined from the three-dimensional model of the local user's face.

### Interactive Process for Capturing the User's Facial Features

The image-capture device generates the three-dimensional model of the local user's face by capturing and processing a plurality of images that show the user's facial features from various viewpoints. The device makes this image-capture process fast and cost-effective by allowing the user to sweep the device's on-board camera across the front and sides of his/her face, for example, in a left-to-right or a right-to-left motion. However, to generate a quality three-dimensional model, the user needs to make sure that he/she does not move the device too fast so that the captured images are not blurred, and also needs to make sure that the images capture enough facial features of the local user.

In some embodiments, the device can monitor its motion and the quality of the captured images to let the user know when he/she needs to slow down his/her motion, repeat his/her motion, reposition the device to better capture his/her face, or move the device to a specific viewpoint to capture facial features from any necessary orientations. For example, the device can monitor the motion using an on-board gyroscope, and can monitor the quality of a captured image by analyzing its brightness, contrast, sharpness, and/or by counting the number of detectable facial features. The device interacts with the local user to facilitate capturing images that include a sufficient number of detectable facial features.

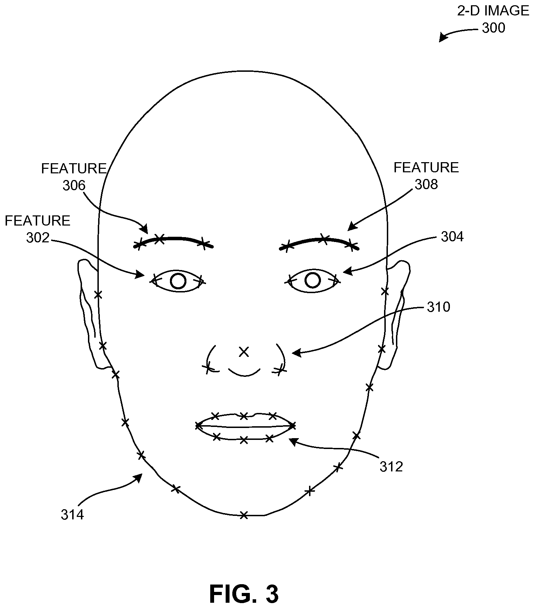

FIG. 3 illustrates a plurality of detected facial feature points from a two-dimensional image 300 in accordance with an embodiment. The feature points indicate the size, shape, and/or position of a set of facial features that the device is programmed or trained to recognize. For example, image 300 illustrates a plurality of feature points (illustrated using cross marks) for a set of facial features, such as left eye features 302 and right eye features 304, as well as left eyebrow features 306 and right eyebrow features 308. The detected features can also include nose features 310, lips features 312, and jawline features 314. Other possible features include a hairline, the chin, ears, etc. In some embodiments, the detected features can also include feature points surrounding other facial anomalies that are not found on every face, such as a dimple, a birthmark, a scar, a tattoo, etc.

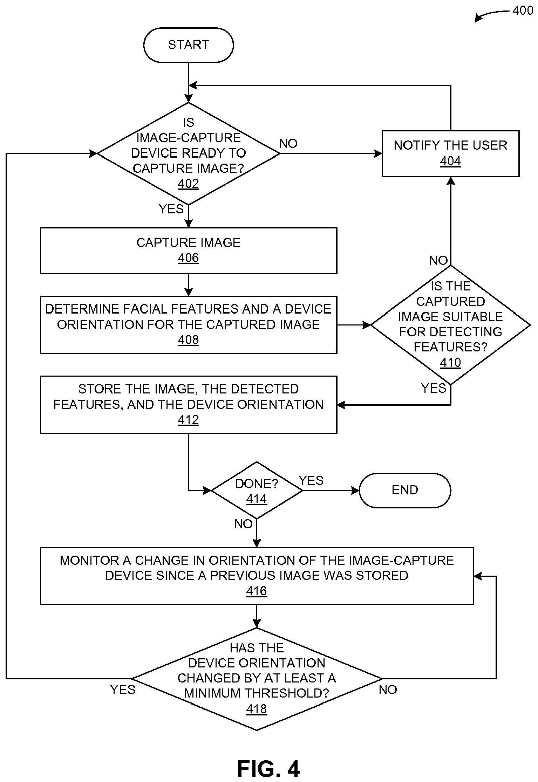

FIG. 4 presents a flow chart illustrating a method for capturing a set of images of a local user in accordance with an embodiment. During operation, the image-capture device can determine whether it is ready to capture an image (operation 402). For example, the device may determine that the user is sweeping the motion-capture device too fast, which could result in a blurry image. If the device is not ready, the device can notify the user that it cannot capture (operation 404), for example, by playing a sound, generating a certain vibration pattern, generating a flash pattern (e.g., using the camera's flash), or displaying an image on the device's screen. When the user notices the notification, the user can respond by slowing down his/her sweeping motion of the image-capture device.

Otherwise, the device can capture the image (operation 406), and processes the image to determine facial features of the local user and a device orientation for the captured image (operation 408). The device then determines whether the image is suitable for detecting features of the local user (operation 410). For example, the image-capture device can determine whether it can detect a face, and/or whether it can detect a sufficient number of facial features. If the captured image corresponds to the front of the user's face, the device may expect to detect at least six facial features. However, if the device determines that the captured image is a profile view of the user's face, the device may expect to capture at least three or four facial features.

If the device cannot detect a sufficient number of features from the captured image, the device can return to operation 404 to notify the user of this problem. When the user notices this notification, the user can respond by re-aligning the image-capture device so that the user's face is visible in the captured image, by ensuring there is sufficient ambient light for capturing an image, and/or by ensuring that the device is steady enough for capturing an infocus image. However, if the image is suitable for detecting features, the device stores the image, the detected feature points, and a device orientation for the captured image (operation 412).

The device then determines whether it has captured enough images for generating the three-dimensional model (operation 414). If so, the device can proceed to an end terminal. Otherwise, the device monitors a change in its orientation from that of a previous stored image (operation 416), and determines whether the orientation has changed by at least a minimum threshold (operation 418). If the device's orientation has not changed beyond this threshold (e.g., a captured image would be too similar to that of a previous stored image), the device can return to operation 416 after a short delay (e.g., a few milliseconds). However, if the device's orientation is sufficiently different from that of previous captured images, the device can return to operation 402 to capture another image. The device can continue to perform method 400 until it has captured enough images from which it can generate a three-dimensional model of the user's face.

## Generating a Three-Dimensional Model

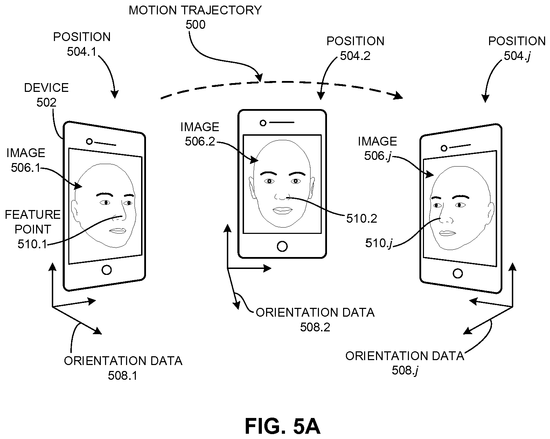

FIG. 5A illustrates a motion trajectory 500 of an image-capture device 502 during an image capture operation in accordance with an embodiment. When the user begins the image-capture operation, the image-capture device captures image 506.1 and orientation data 508.1 while the device is in orientation 504.1. As the user sweeps the device in front of his/her face, the device can capture images 506.2 through 506.*j* and orientation data 508.2 through 508.*j* for device orientations 504.2 through 504.*j*, respectively.

The image-capture device can determine orientation data 508 using any motion-sensor, now known or later developed, that can determine absolute or relative three-dimensional coordinates for each captured image. For example, the motion sensor can include a gyroscope that provides three rotation angles perpendicular to the device's plane (e.g., the pitch, yaw, and roll angles along the X, Y, and Z axis, respectively) for each captured image. The device then processes the captured images to detect the image coordinates of certain facial features across the various captured images. For example, the device can determine feature points 510.1, 510.2, and 510.j that correspond to a nose feature captured by images 506.1, 506.2, and 506.j, respectively. The coordinates of a feature point *i* within an image *j* is hereinafter denoted using the tuple $(u_i^{(j)}, v_i^{(j)})$. The device then processes the orientation data 508 and the feature points 510 to generate a three-dimensional model in a global coordinate system. The three-dimensional model is hereinafter denoted using the tuple $x^{(0)}, y^{(0)}, z^{(0)}$, such that the superscript (0) indicates the model is represented using the global coordinate system under which all captured images are processed.

Under the perspective projection, the relationship of the two-dimensional coordinates of a point 510 and the 3D physical space for the three-dimensional model can be represented by the projection transformation as follows:

$$\left[ u,v,1 \right]^T = K_{3\times3}[R_{3\times3} \mid T_{3\times1}][x, y, z, 1]^T \qquad (1)$$

In equation (1), $[u,v,1]^T$ provides the homogenous image coordinates of a feature point, and $[x, y, z, 1]^T$ provides the homogenous three-dimensional coordinates for the feature point in the 3D physical space. $K_{3\times3}$ provides a 3x3 matrix consisting of intrinsic camera parameters, such as focal length, principal point, aspect ratio, skew factor and radial distortion. The value for *K* can be computed beforehand using any camera calibration technique, such as the technique described by Zhengyou Zhang in "A flexible new technique for camera calibration" (IEEE Transactions on Pattern Analysis and Machine Intelligence, vol. 22, issue 11, pages 1330-1334, 2000). $[R_{3\times3} \mid T_{3\times1}]$ provides a 3D rotation and translation matrix, which facilitates converting a point in the 3D physical space to a point in the camera's local 3D coordinate system. The device generates the 3x4 matrix $[R_{3\times3} \mid T_{3\times1}]$ by concatenating the 3x3 rotation matrix $R_{3\times3}$ and the 3x1 translation matrix $T_{3\times1}$.

Although each captured image has a local 3D coordinate system, the device uses a global coordinate system to generate the three-dimensional model of the local user from the captured images. In some embodiments, the device can select the coordinate system for one captured image (e.g., the frontal view of the user, hereinafter referred to as view 0) as the global coordinate system for the three-dimensional model. The global 3D coordinate system is hereinafter denoted using the notation $X^{(0)}, Y^{(0)}, Z^{(0)}$.

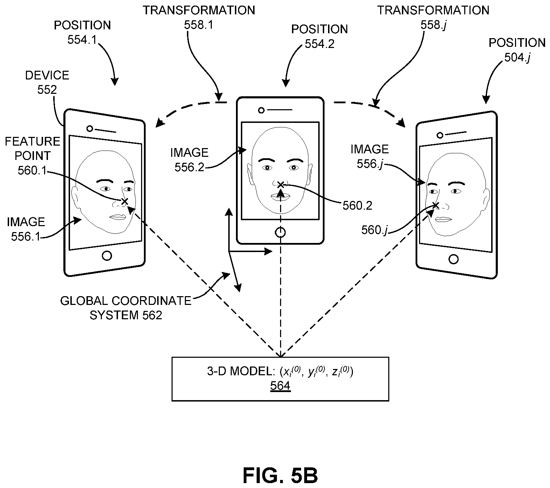

FIG. 5B illustrates modeling data that is computed while generating the three-dimensional model of the local user in accordance with an embodiment. To generate a three dimensional model 564, the device first selects one captured image to use as a reference point for processing all other images. For example, the device can select an orientation 554.2, which corresponds to a front-facing image 556.2 of the local user, as the global coordinate system 562. The device then generates a system of linear equations based on equation (1) for all feature points detected across all images, and relative to the global coordinate system 562. The device generates three-dimensional model 564 by solving this system of linear equations.

The system of linear equations includes a linear equation for each feature point of each captured image (e.g., for a feature point $i$ from an image view $j$, represented using $(u_i^{(j)}, v_i^{(j)})$). These equations map the coordinates of these feature points from the global coordinate system using a transformation represented using $[R_{j,0} | \tilde{T}_{j,0}]$ (e.g., transformations 558.1 and 558.$j$ for feature points 560.1 and 560.$j$, respectively).

To determine the camera orientation for an image captured at a view $j$, the image-capture device computes the 3D rotation $R_{j,0}$ and translation $T_{j,0}$ from the global coordinate system $X^{(0)}$, $Y^{(0)}$, $Z^{(0)}$ to the local 3D coordinate system $X^{(j)}$, $Y^{(j)}$, $Z^{(j)}$ for view $j$. The device uses the gyroscope data to compute an accurate rotation matrix $R_{j,0}$, which facilitates generating the three-dimensional model by solving the set of linear equations, making the computations extremely lightweight for mobile devices. To determine translation $T_{j,0}$, the device needs to solve the system of linear equations.

## Setting Up the System of Linear Equations

From equation (1), each detected facial feature point i introduces 3 unknowns and 4 linear equations:

$$[u_i^{(0)}, v_i^{(0)}, 1]^T = K[I \,|\, 0][\tilde{x}_i^{(0)}, \tilde{y}_i^{(0)}, \tilde{z}_i^{(0)}, 1]^T \qquad (2)$$

$$[u_i^{(j)}, v_i^{(j)}, 1]^T = K[R_{j,0} \,|\, \tilde{T}_{j,0}][\tilde{x}_i^{(0)}, \tilde{y}_i^{(0)}, \tilde{z}_i^{(0)}, 1]^T \qquad (3)$$

Equation (2) corresponds to a projection transformation within view 0 (the view selected as the global coordinate system for generating the three-dimensional model). Equation (3) corresponds to a projection transformation for a view $j$, relative to the global coordinate system corresponding of view 0.

The device can determine input values for the following variables in equations (2) and (3) as follows. The variable $K$ takes as input the 3x3 intrinsic matrix that is computed for the device ahead of time when calibrating the device's camera. The 3x3 matrix $R_{j,0}$ takes as input the rotation matrix computed from gyroscope data, which corresponds to a rotation of the device from view 0 to view $j$. The tuple $(u_i^{(0)}, v_i^{(0)})$ takes as input an image coordinate detected for the facial marker $i$ from the image captured from view 0, and the tuple $(u_i^{(j)}, v_i^{(j)})$ takes as input an image coordinate detected for the facial marker i from the image captured from view $j$.

The symbols in equations (2) and (3) denoted with a tilde (~) correspond to unknown values that the device solves for (e.g., during operation 210 of FIG. 2). Specifically, the tuple $(\tilde{x}_i^{(0)}, \tilde{y}_i^{(0)}, \tilde{z}_i^{(0)})$ provides three-dimensional coordinates of the facial marker i with respect to the global coordinate system $X^{(0)}$, $Y^{(0)}$, $Z^{(0)}$. The 3x1 matrix $\tilde{T}_{j,0}$ provides a translation matrix from view 0 to view $j$, which is common for all facial markers in view $j$.

For $n$ detected facial markers, because $\tilde{T}_{j,0}$ is common for all facial markers in view $j$, there are $4n$ equations and $3n+3$ unknowns. If $n$ is sufficiently large, the system of equations (based on equations (2) and (3)) can provide more equations than unknowns. The device can solve this system of linear equations for view $j$ using techniques such as linear least-square fitting.

As the user sweeps the image-capture device across the forefront of his/her face, the device can capture images for a plurality of views. Each additional view $j$ contributes an additional $4n$ equations (based on equations (2) and (3)), and introduces 3 new unknowns (based on the 3x1 translation matrix $\tilde{T}_{j,0}$ for view $j$).

## Solving the System of Equations

In some embodiments, the device solves the linear equations generated for all views together (e.g., during operation 210 of FIG. 2). Solving the system of equations provides the three-dimensional coordinates $(\tilde{x}_i^{(0)}, \tilde{y}_i^{(0)}, \tilde{z}_i^{(0)})$ for all facial markers i, and provides the translation matrix $\tilde{T}_{j,0}$ for all views $j$, both relative to the global coordinate system of view 0. Solving the complete set of equations together provides several advantages. Doing so overcomes the limitation that some facial markers may not be detected in all views, and provides a solution that is robust toward errors in detecting feature coordinates from the individual views.

Normalizing the Three-Dimensional Model

Once the device generates the three-dimensional model of the user's face (e.g., either in a face enrollment or a face-recognition operation), the device transforms the model to generate a normalized three-dimensional model. For example, the image-capture device can generate the normalized model by performing a translation operation, a rotation operation, and a scale-change operation so that the two eyes are fixed to certain coordinates (e.g., coordinates (1,0,0) and (-1,0,0) for the user's left and right eyes, respectively).

This computation-efficient transformation facilitates normalizing the three-dimensional model at the image-capture device, and prevents the device from having to fit two models to a common coordinate system before comparing the two models, which can be time consuming when comparing the local user's face to those of other users in a large user-profile database.

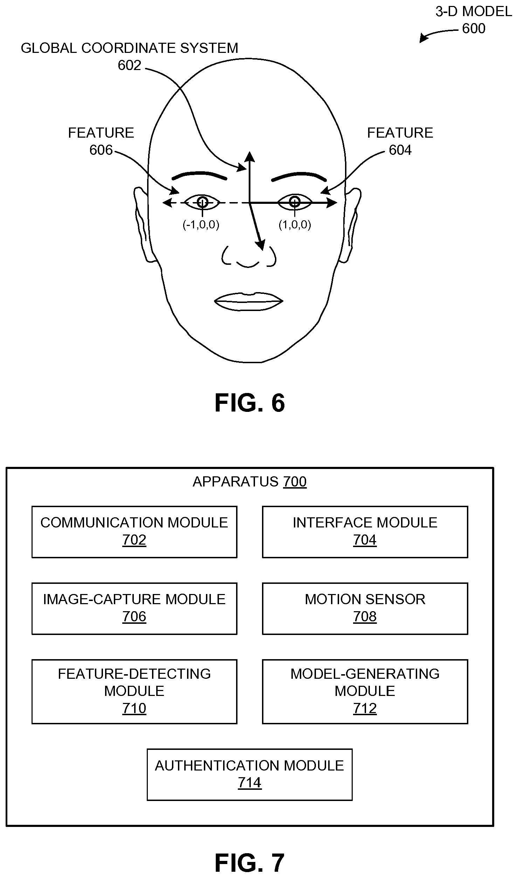

FIG. 6 illustrates a normalized three-dimensional model 600 of a user's face in accordance with an embodiment. Specifically, the scale and orientation of normalized three-dimensional model 600 is transformed so that the left and right eyes (e.g., features 604 and 606) are positioned at feature coordinates (1,0,0) and (-1,0,0) of global coordinate system 602, respectively.

**Computing a Difference Between Three-Dimensional Models**

Once the device generates the three-dimensional model, the device can compare the model of the user's face to other three-dimensional models (e.g., to perform face recognition or to authenticate the user), without first fitting them to a common coordinate system. To compare two models, the device can compute the difference between features of the two three-dimensional models by computing a distance between corresponding feature points of the two models.

For example, the device can compute the distance as a Euclidean distance between all features points i that occur in the two models as follows:

$$diff = \sqrt{\sum_i ((x_i' - x_i)^2 + (y_i' - y_i)^2 + (z_i' - z_i)^2)} \qquad (4)$$

In equation (4), the two coordinates $(x_i, y_i, z_i)$ and $(x_i', y_i', z_i')$ correspond to a feature point i that occurs in the two three-dimensional models being compared. The computed difference, *diff,* provides a numeric value indicating a difference between the two three-dimensional models (e.g., as a Euclidean distance relative to the global coordinate system).

In some embodiments, the image-capture device can compare two three-dimensional models in a way that accounts for differences in coordinate systems for the two models. For example, if a stored three-dimensional model of a registered user's face has not been normalized, or has been normalized to a different coordinate system, the device can perform the comparison operation by solving the following linear equation:

$$\left[ x', y', z', 1 \right]^T = \begin{bmatrix} \tilde{s}I_{3\times3} & 0 \\ 0 & 1 \end{bmatrix} [R \mid \tilde{T}][x, y, z, 1]^T \qquad (5)$$

The device can compute the rotation matrix R using gyroscope data, and can solve for the translation matrix $\tilde{T}$ and the scale factor $\tilde{s}$ by solving equation (5), for example, using linear least-square fitting. The device can then compute the fitting error for each three-dimensional model, and can use the fitting error as the difference between the two three dimensional models.

To perform face recognition, the device can compute the distance between the three-dimensional model of the user's face to those of other registered users (e.g., using equation (4) or equation (5)). If the confidence is high for the closest match (e.g., the difference of the closest match is less than a certain threshold), the device can provide the identity of the closest match as the user's identity. Otherwise, the device can provide a result indicating that the local user is not recognized.

If the image-capture device is verifying the identity of the local user, the device can compare the three-dimensional model of the local user to that of a user profile that the user claims belongs to him. If the confidence is high (e.g., the difference is less than the threshold), the device can grant the local user access. Otherwise, the device denies the local user access. FIG. 7 illustrates an exemplary apparatus 700 that facilitates generating a three-dimensional model of a local user in accordance with an embodiment. Apparatus 700 can comprise a plurality of hardware and/or software modules which may communicate with one another via a wired or wireless communication channel. Apparatus 700 may be realized using one or more integrated circuits, and may include fewer or more modules than those shown in FIG. 7. Further, apparatus 700 may be integrated in a computer system, or realized as a separate device which is capable of communicating with other computer systems and/or devices. Specifically, apparatus 700 can comprise a communication module 702, an interface module 704, an image-capture module 706, a motion sensor 708, a feature-detecting module 710, a model-generating module 712, and an authentication module 708.

In some embodiments, communication module 702 can communicate with third-party systems, such as an authentication server. Interface module 704 can provide feedback to the local user during the authentication process, for example, to alert the user of a potential problem that prevents apparatus 700 from detecting the local user's facial features. Image-capture module 706 can capture a set of images of the local user from various orientations, and motion sensor 708 can determine orientation information for the captured images. Feature-detecting module 710 can detect a plurality of features of the local user's face from the captured images, and model-generating module 712 can generate a three-dimensional model of the local user's face from the detected features and orientation information for their corresponding images. Authentication module 708 can compare the generated three-dimensional model to those of registered users to identify or authenticate the local user.

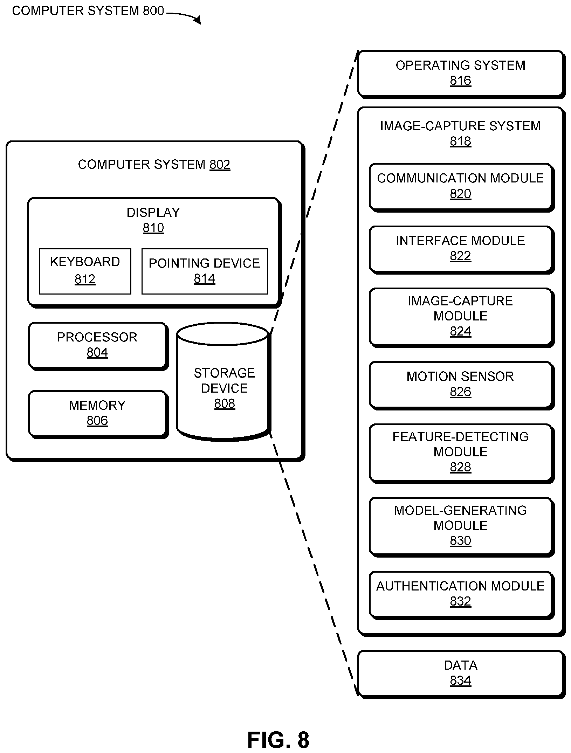

FIG. 8 illustrates an exemplary computer system 802 that facilitates generating a three-dimensional model of a local user in accordance with an embodiment. Computer system 802 includes a processor 804, a memory 806, and a storage device 808. Memory 806 can include a volatile memory (e.g., RAM) that serves as a managed memory, and can be used to store one or more memory pools. Furthermore, computer system 802 can be coupled to a display device 810, a keyboard 812, and a pointing device 814. Storage device 808 can store an operating system 816, an image-capture system 818, and data 834.

In some embodiments, display 810 includes a touch screen display, such that keyboard 812 includes a virtual keyboard presented on display 810, and pointing device 814 includes a touch-sensitive device coupled to display 810 (e.g., a capacitive-touch sensor or a resistive-touch sensor layered on display 810). To type using keyboard 812, the user can tap on a portion of display 810 that presents a desired key. The user can also select any other display object presented on display 810 by tapping on the display object, and can interact with the display object using a set of predetermined touch-screen gestures.

Image-capture system 818 can include instructions, which when executed by computer system 802, can cause computer system 802 to perform methods and/or processes described in this disclosure. Specifically, image-capture system 818 may include instructions for communicating with third-party systems, such as an authentication server (communication module 820). Further, image-capture system 818 can include instructions for providing feedback to the local user during the authentication process, for example, to alert the user of a potential problem that prevents image-capture system 800 from detecting the local user's facial features (interface module 822).

Image-capture system 818 can also include instructions for capturing a set of images of the local user from various orientations (image-capture module 824), and for determining orientation information for the captured images (motion-sensing module 826). Image-capture system 818 can also include instructions for detecting a plurality of features of the local user's face from the captured images (feature-detecting module module 828), and for generating a three-dimensional model of the local user's face from the detected features and orientation information for their corresponding images (model-generating module 830). Image-capture system 818 can also include instructions for comparing the generated three-dimensional model to those of registered users to identify or authenticate the local user (authentication module 832).

Data 834 can include any data that is required as input or that is generated as output by the methods and/or processes described in this disclosure. Specifically, data 834 can store at least user profiles for one or more registered users, access privileges for the registered users, and at least one three-dimensional model for each of the registered user's faces.

The data structures and code described in this detailed description are typically stored on a computer-readable storage medium, which may be any device or medium that can store code and/or data for use by a computer system. The computer-readable storage medium includes, but is not limited to, volatile memory, non-volatile memory, magnetic and optical storage devices such as disk drives, magnetic tape, CDs (compact discs), DVDs (digital versatile discs or digital video discs), or other media capable of storing computer-readable media now known or later developed.

The methods and processes described in the detailed description section can be embodied as code and/or data, which can be stored in a computer-readable storage medium as described above. When a computer system reads and executes the code and/or data stored on the computer-readable storage medium, the computer system performs the methods and processes embodied as data structures and code and stored within the computer-readable storage medium.

Furthermore, the methods and processes described above can be included in hardware modules. For example, the hardware modules can include, but are not limited to, application-specific integrated circuit (ASIC) chips, field-programmable gate arrays (FPGAs), and other programmable-logic devices now known or later developed. When the hardware modules are activated, the hardware modules perform the methods and processes included within the hardware modules.

The foregoing descriptions of embodiments of the present invention have been presented for purposes of illustration and description only. They are not intended to be exhaustive or to limit the present invention to the forms disclosed. Accordingly, many modifications and variations will be apparent to practitioners skilled in the art. Additionally, the above disclosure is not intended to limit the present invention. The scope of the present invention is defined by the appended claims.

**Claims**

1. A computer-implemented method, comprising:

    capturing (204), by an image-capture device on a mobile device, a set of images of a person's face from various orientations;
    determining (208) orientation information for a respective captured image, wherein the determining comprises: capturing, by a motion sensor of the mobile device, orientation information of the mobile device at the time each one of the set of images is captured, and storing the orientation information along with the captured image;
    detecting (206) a plurality of features of the person's face from the respective captured image;
    generating (210) a three-dimensional model of the person's face from the detected features and orientation information for their corresponding images; and
    authenticating (212) the person's identity based on the three-dimensional model;
    wherein capturing the set of images comprises:

        monitoring (416) a change in orientation of the image-capture device;
        determining (418) that the orientation has changed by at least a minimum amount from an orientation of a previous captured image; determining (402) whether the mobile device is stabilized; capturing (406) an image in response to determining (418) that the orientation has changed by at least a minimum amount and that the image-capture device is stabilised (402); determining (410) whether the image is suitable for detecting facial features; and
        storing (412) the captured image in response to determining (410) that the image is suitable for detecting facial features;
        wherein capturing the set of images further comprises providing a notification (404) in response to:

            determining that the image-capture device is not stabilized;
            determining that the person's face is not in the image frame;
            determining that the current orientation of the device is not suitable for detecting features of the person's face; or
            determining that no more images need to be captured.

2. The method of claim 1, wherein the notification includes one or more of:

    a sound;
    a vibration pattern;
    a flashing pattern from a light source of the image-capture device; and
    an image displayed on a screen of the image-capture device.

3. The method of claim 1, wherein capturing the set of images is performed in response to receiving a request to register the person as a user; and
   wherein the method further comprises storing the three-dimensional model in association with a user profile for the person.

4. The method of claim 1, wherein capturing the set of images is performed in response to receiving (202) a request to authenticate the person.

5. The method of claim 4, further comprising:

EP 2 842 075 B1

authenticating the person by determining whether the generated three-dimensional model of the person matches a stored three-dimensional model of a registered user.

6. The method of claim 4, further comprising authenticating the person, which involves:

sending the generated three-dimensional model of the person to a remote authentication system; and
receiving an authentication response which indicates whether the person is a registered user.

7. A mobile device, comprising:

an image-capture module (706) configured to capture a set of images of a person's face from various orientations;
a motion sensor (708) configured to determine orientation information for a respective captured image, wherein the motion sensor is specifically configured to capture orientation information of the mobile device at the time each one of the set of images is captured, and store the orientation information along with the captured image;
a feature-detecting module (710) configured to detect a plurality of features of the person's face from the respective captured image;
a model-generating module (712) configured to generate a three-dimensional model of the person's face from the detected features and orientation information for their corresponding images; and
an authentication module (714) configured to authenticate the person's identity based on the three-dimensional mode;
wherein while capturing the set of images, the image-capture module (706) is further configured to:

monitor a change in orientation;
determine that the orientation has changed by at least a minimum amount from an orientation of a previous captured image; determine whether the mobile device is stabilized; capture an image in response to determining that the orientation has changed by at least a minimum amount and that the image-capture device is stabilized; determine whether the image is suitable for detecting facial features; and
store the captured image in response to determining that the image is suitable for detecting facial features;
wherein the mobile device further comprising an interface module (704) configured to provide a notification in response to:

determining that the image-capture device is not stabilized;
determining that the person's face is not in the image frame;
determining that the current orientation of the device is not suitable for detecting features of the person's face; or
determining that no more images need to be captured.

8. The mobile device of claim 7, wherein the notification includes one or more of:

a sound;
a vibration pattern;
a flashing pattern from a light source of the image-capture device; and
an image displayed on a screen of the image-capture device.

9. The mobile device of claim 7, further comprising an interface module (704) configured to receive a request to register the person as a user;
wherein the image-capture module is configured to capture the set of images in response to the request to register the person as a user; and
wherein the apparatus further comprises a profile-managing module to store the three-dimensional model in association with a user profile for the person.

10. The mobile device of claim 7, further comprising an interface module (704) configured to receive a request to authenticate the person;
wherein the image-capture module is configured to capture the set of images in response to the request to authenticate the person.

11. The mobile device of claim 10, further comprising an authentication module (714) configured to authenticate the person by determining whether the generated three-dimensional model of the person matches a stored three-

12

dimensional model of a registered user.

**12.** The mobile device of claim 10, further comprising an authentication module (714) configured to authenticate the person, wherein authenticating the person involves:

sending the generated three-dimensional model of the person to a remote authentication system; and
receiving an authentication response which indicates whether the person is a registered user.

**Patentansprüche**

**1.** Computerimplementiertes Verfahren, das Folgendes umfasst:

Erfassen (204) durch eine Bilderfassungsvorrichtung auf einer mobilen Vorrichtung einer Gruppe von Bildern des Gesichts einer Person aus verschiedenen Orientierungen;
Bestimmen (208) von Orientierungsinformationen für ein jeweiliges aufgenommenes Bild, wobei das Bestimmen Folgendes umfasst: Erfassen durch einen Bewegungssensor der mobilen Vorrichtung von Orientierungsinformationen der mobilen Vorrichtung zu der Zeit, zu der jedes aus der Gruppe von Bildern erfasst wird, und Speichern der Orientierungsinformationen zusammen mit dem erfassten Bild;
Detektieren (206) von mehreren Merkmalen des Gesichts der Person aus dem jeweiligen erfassten Bild;
Erzeugen (210) eines dreidimensionalen Modells des Gesichts der Person aus den detektierten Merkmalen und den Orientierungsinformationen für ihre jeweiligen Bilder; und
Authentifizieren (212) der Identität der Person basierend auf dem dreidimensionalen Modell;
wobei das Erfassen der Gruppe von Bildern Folgendes umfasst:

Überwachen (416) einer Änderung der Orientierung der Bilderfassungsvorrichtung;
Bestimmen (418), dass sich die Orientierung um wenigstens einen kleinsten Betrag geändert hat, aus einer Orientierung eines vorher erfassten Bilds;
Bestimmen (402), ob die mobile Vorrichtung stabilisiert ist;
Erfassen (406) eines Bilds in Reaktion auf das Bestimmen (418), dass sich die Orientierung um wenigstens einen kleinsten Betrag geändert hat und dass die Bilderfassungsvorrichtung stabilisiert ist (402); Bestimmen (410), ob das Bild zum Detektieren von Gesichtsmerkmalen geeignet ist; und
Speichern (412) des erfassten Bilds in Reaktion auf das Bestimmen (410), dass das Bild zum Detektieren von Gesichtsmerkmalen geeignet ist;
wobei das Erfassen der Gruppe von Bildern ferner Bereitstellen einer Meldung (404) in Reaktion auf Folgendes umfasst:

Bestimmen, dass die Bilderfassungsvorrichtung nicht stabilisiert ist;
Bestimmen, dass das Gesicht der Person nicht in dem Bildrahmen ist;
Bestimmen, dass die aktuelle Orientierung der Vorrichtung nicht zum Detektieren von Merkmalen des Gesichts der Person geeignet ist; oder
Bestimmen, dass keine weiteren Bilder erfasst werden müssen.

**2.** Verfahren nach Anspruch 1, wobei die Meldung eines oder mehrere aus dem Folgenden umfasst:

einen Ton;
ein Vibrationsmuster;
ein Blinkmuster aus einer Lichtquelle der Bilderfassungsvorrichtung; und
ein Bild, das auf einem Bildschirm der Bilderfassungsvorrichtung angezeigt wird.

**3.** Verfahren nach Anspruch 1, wobei das Erfassen der Gruppe von Bildern ausgeführt wird in Reaktion auf Empfangen einer Anforderung, die Person als einen Anwender zu registrieren; und
wobei das Verfahren ferner Speichern des dreidimensionalen Modells in Zuordnung zu einem Anwenderprofil für die Person umfasst.

**4.** Verfahren nach Anspruch 1, wobei das Erfassen der Gruppe von Bildern ausgeführt wird in Reaktion auf Empfangen (202) einer Anforderung, die Person zu authentifizieren.

**5.** Verfahren nach Anspruch 4, das ferner Folgendes umfasst:

Authentifizieren der Person durch Bestimmen, ob das erzeugte dreidimensionale Modell der Person mit einem gespeicherten dreidimensionalen Modell eines registrierten Anwenders übereinstimmt.

**6.** Verfahren nach Anspruch 4, das ferner Authentifizieren der Person umfasst, was Folgendes beinhaltet:

Senden des erzeugten dreidimensionalen Modells der Person zu einem entfernten Authentifizierungssystem; und
Empfangen einer Authentifizierungsantwort, die angibt, ob die Person ein registrierter Anwender ist.

**7.** Mobile Vorrichtung, die Folgendes umfasst:

ein Bilderfassungsmodul (706), das konfiguriert ist, eine Gruppe von Bildern des Gesichts einer Person aus verschiedenen Orientierungen zu erfassen;
einen Bewegungssensor (708), der konfiguriert ist, Orientierungsinformationen für ein jeweiliges erfasstes Bild zu bestimmen, wobei der Bewegungssensor insbesondere konfiguriert ist, Orientierungsinformationen der mobilen Vorrichtung zu der Zeit, wenn jedes aus der Gruppe von Bildern erfasst wird, zu erfassen und die Orientierungsinformationen zusammen mit dem erfassten Bild zu speichern;
ein Merkmalsdetektionsmodul (710), das konfiguriert ist, mehrere Merkmale des Gesichts der Person aus dem jeweiligen aufgenommenen Bild zu detektieren;
ein Modellerzeugungsmodul (712), das konfiguriert ist, ein dreidimensionales Modell des Gesichts der Person aus den detektierten Merkmalen und den Orientierungsinformationen für ihre jeweiligen Bilder zu erzeugen; und
ein Authentifizierungsmodul (714), das konfiguriert ist, die Identität der Person basierend auf dem dreidimensionalen Modell zu authentifizieren;
wobei das Bilderfassungsmodul (706) ferner konfiguriert ist, während es die Gruppe von Bildern erfasst:

eine Änderung der Orientierung zu überwachen;
zu bestimmen, dass sich die Orientierung um wenigstens einen kleinsten Betrag geändert hat, aus einer Orientierung eines vorher erfassten Bilds;
zu bestimmen, ob die mobile Vorrichtung stabilisiert ist;
ein Bild zu erfassen in Reaktion auf das Bestimmen, dass sich die Orientierung um wenigstens einen kleinsten Betrag geändert hat und dass die Bilderfassungsvorrichtung stabilisiert ist; zu bestimmen, ob das Bild zum Detektieren von Gesichtsmerkmalen geeignet ist; und
das erfasste Bild in Reaktion auf das Bestimmen, dass das Bild zum Detektieren von Gesichtsmerkmalen geeignet ist, zu speichern;
wobei die mobile Vorrichtung ferner ein Schnittstellenmodul (704) umfasst, das konfiguriert ist, eine Meldung in Reaktion auf Folgendes bereitzustellen:

Bestimmen, dass die Bilderfassungsvorrichtung nicht stabilisiert ist;
Bestimmen, dass das Gesicht der Person nicht in dem Bildrahmen ist;
Bestimmen, dass die aktuelle Orientierung der Vorrichtung nicht zum Detektieren von Merkmalen des Gesichts der Person geeignet ist; oder
Bestimmen, dass keine weiteren Bilder erfasst werden müssen.

**8.** Mobile Vorrichtung nach Anspruch 7, wobei die Meldung eines oder mehrere aus dem Folgenden umfasst:

einen Ton;
ein Vibrationsmuster;
ein Blinkmuster aus einer Lichtquelle der Bilderfassungsvorrichtung; und
ein Bild, das auf einem Bildschirm der Bilderfassungsvorrichtung angezeigt wird.

**9.** Mobile Vorrichtung nach Anspruch 7, die ferner ein Schnittstellenmodul (704) umfasst, das konfiguriert ist, eine Anforderung, die Person als einen Anwender zu registrieren, zu empfangen;
wobei das Bilderfassungsmodul konfiguriert ist, die Gruppe von Bildern zu erfassen in Reaktion auf die Anforderung, die Person als einen Anwender zu registrieren; und wobei die Einrichtung ferner ein Profilmanagementmodul umfasst, um das dreidimensionale Modell in Zuordnung zu einem Anwenderprofil für die Person zu speichern.

**10.** Mobile Vorrichtung nach Anspruch 7, die ferner ein Schnittstellenmodul (704) umfasst, das konfiguriert ist, eine Anforderung, die Person zu authentifizieren, zu empfangen; wobei das Bilderfassungsmodul konfiguriert ist, die Gruppe von Bildern zu erfassen in Reaktion auf eine Anforderung, die Person zu authentifizieren.

**11.** Mobile Vorrichtung nach Anspruch 10, die ferner ein Authentifizierungsmodul (714) umfasst, das konfiguriert ist, die Person durch Bestimmen, ob das erzeugte dreidimensionale Modell der Person mit einem gespeicherten dreidimensionalen Modell eines registrierten Anwenders übereinstimmt, zu authentifizieren.

**12.** Mobile Vorrichtung nach Anspruch 10, die ferner ein Authentifizierungsmodul (714) umfasst, das konfiguriert ist, die Person zu authentifizieren, wobei das Authentifizieren der Person beinhaltet:

Senden des erzeugten dreidimensionalen Modells der Person zu einem entfernten Authentifizierungssystem; und

Empfangen einer Authentifizierungsantwort, die angibt, ob die Person ein registrierter Anwender ist.

**Revendications**

**1.** Procédé mis en oeuvre sur ordinateur, comprenant :

la capture (204), par un dispositif de capture d'images sur un dispositif mobile, d'un ensemble d'images du visage d'une personne sous diverses orientations ;
la détermination (208) d'informations d'orientation pour une image capturée respective, dans lequel le détermination comprend :

la capture, par un capteur de mouvement du dispositif mobile, d'informations d'orientation du dispositif mobile au moment où chacune de l'ensemble d'images est capturée, et le stockage des informations d'orientation en association avec l'image capturée ;
la détection (206) d'une pluralité de traits caractéristiques du visage d'une personne à partir de l'image capturée respective ;
la génération (210) d'un modèle tridimensionnel du visage d'une personne à partir des traits caractéristiques détectés et d'informations d'orientation pour les images qui leur correspondent ; et
l'authentification (212) de l'identité de la personne sur la base du modèle tridimensionnel ;
dans lequel la capture de l'ensemble d'images comprend :

la surveillance (416) d'une variation d'orientation du dispositif de capture d'images ;
la détermination (418) du fait que l'orientation a varié d'au moins une quantité minimale par rapport à une orientation d'une image capturée précédente ;
la détermination (402) du fait de savoir si le dispositif mobile est stabilisé ou non;
la capture (406) d'une image en réponse à la détermination (418) du fait que l'orientation a varié d'au moins une quantité minimale et du fait que le dispositif de capture d'images est stabilisé (402) ;
la détermination (410) du fait de savoir si l'image est appropriée ou non pour la détection de traits caractéristiques du visage ; et
le stockage (412) de l'image capturée en réponse à la détermination (410) du fait que l'image est appropriée pour la détection de traits caractéristiques du visage ;
dans lequel la capture de l'ensemble d'images comprend en outre la fourniture d'une notification (404) en réponse à :

la détermination du fait que le dispositif de capture d'images n'est pas stabilisé ;
la détermination du fait que le visage d'une personne n'est pas dans le trame d'image ;
la détermination du fait que l'orientation actuelle du dispositif n'est pas appropriée pour la détection de traits caractéristiques du visage d'une personne ; ou
la détermination du fait qu'il n'est plus nécessaire de capturer des images.

**2.** Procédé selon la revendication 1, dans lequel la notification comprend un ou plusieurs des éléments suivants :

un son ;

un motif de vibration ;
un motif de clignotement d'une source lumineuse du dispositif de capture d'images; et
une image affichée sur un écran du dispositif de capture d'images.

3. Procédé selon la revendication 1, dans lequel la capture de l'ensemble d'images est effectuée en réponse à la réception d'une demande d'enregistrement de la personne en tant qu'utilisateur ; et
dans lequel le procédé comprend en outre le stockage du modèle tridimensionnel en association avec un profil d'utilisateur pour la personne.

4. Procédé selon la revendication 1, dans lequel la capture de l'ensemble d'images est effectuée en réponse à la réception (202) d'une demande d'authentification de la personne.

5. Procédé selon la revendication 4, comprenant en outre :

   l'authentification de la personne en déterminant si le modèle tridimensionnel généré de la personne concorde avec un modèle tridimensionnel stocké d'un utilisateur enregistré.

6. Procédé selon la revendication 4, comprenant en outre l'authentification de la personne, qui implique:

   l'envoi du modèle tridimensionnel généré de la personne à un système d'authentification distant ; et
   la réception d'une réponse d'authentification qui indique si la personne est ou non un utilisateur enregistré.

7. Dispositif mobile, comprenant :

   une module de capture d'images (706) configuré pour capturer un ensemble d'images du visage d'une personne sous diverses orientations ;
   un capteur de mouvement (708) configuré pour déterminer des informations d'orientation pour une image capturée respective, dans lequel le capteur de mouvement est plus précisément configuré pour capturer des informations d'orientation du dispositif mobile au moment où chacune de l'ensemble d'images est capturée, et pour stocker les informations d'orientation en association avec l'image capturée ;
   un module de détection de traits caractéristiques (710) configuré pour détecter une pluralité de traits caractéristiques du visage d'une personne à partir de l'image capturée respective ;
   un module de génération de modèle (712) configuré pour générer un modèle tridimensionnel du visage d'une personne à partir des traits caractéristiques détectés et d'informations d'orientation pour les images qui leur correspondent ; et
   un module d'authentification (714) configuré pour authentifier l'identité de la personne sur la base du modèle tridimensionnel ;
   dans lequel, pendant la capture de l'ensemble d'images, le module de capture d'images (706) est en outre configuré pour :

      surveiller une variation d'orientation ;
      déterminer que l'orientation a varié d'au moins une quantité minimale par rapport à une orientation d'une image capturée précédente ;
      déterminer si le dispositif mobile est stabilisé ou non;
      capturer une image en réponse à la détermination du fait que l'orientation a varié d'au moins une quantité minimale et du fait que le dispositif de capture d'images est stabilisé ;
      déterminer si l'image est appropriée ou non pour la détection de traits caractéristiques du visage ; et
      stocker l'image capturée en réponse à la détermination du fait que l'image est appropriée pour la détection de traits caractéristiques du visage ;
      dans lequel le dispositif mobile comprenant en outre un module d'interface (704) configuré pour fournir une notification en réponse à :

         la détermination du fait que le dispositif de capture d'images n'est pas stabilisé ;
         la détermination du fait que le visage d'une personne n'est pas dans le trame d'image ;
         la détermination du fait que l'orientation actuelle du dispositif n'est pas appropriée pour la détection de traits caractéristiques du visage d'une personne ; ou
         la détermination du fait qu'il n'est plus nécessaire de capturer des images.

**8.** Dispositif mobile selon la revendication 7, dans lequel la notification comprend un ou plusieurs des éléments suivants :

un son ;
un motif de vibration ;
un motif de clignotement d'une source lumineuse du dispositif de capture d'images; et
une image affichée sur un écran du dispositif de capture d'images.

**9.** Dispositif mobile selon la revendication 7, comprenant en outre un module d'interface (704) configuré pour recevoir une demande d'enregistrement de la personne en tant qu'utilisateur ;
dans lequel le module de capture d'images est configuré pour capturer l'ensemble d'images en réponse à la demande d'enregistrement de la personne en tant qu'utilisateur ; et
dans lequel l'appareil comprend en outre une module de gestion de profil pour stocker le modèle tridimensionnel en association avec un profil d'utilisateur pour la personne.

**10.** Dispositif mobile selon la revendication 7, comprenant en outre un module d'interface (704) configuré pour recevoir une demande d'authentification de la personne ;
dans lequel le module de capture d'images est configuré pour capturer l'ensemble d'images en réponse à la demande d'authentification de la personne.

**11.** Dispositif mobile selon la revendication 10, comprenant en outre un module d'authentification (714) configuré pour authentifier la personne en déterminant si le modèle tridimensionnel généré de la personne concorde avec un modèle tridimensionnel stocké d'un utilisateur enregistré.

**12.** Dispositif mobile selon la revendication 10, comprenant en outre un module d'authentification (714) configuré pour authentifier la personne, dans lequel l'authentification de la personne implique:

l'envoi du modèle tridimensionnel généré de la personne à un système d'authentification distant ; et
la réception d'une réponse d'authentification qui indique si la personne est ou non un utilisateur enregistré.

**FIG. 1**

200

```
                    ┌─────────────┐
                    │    START    │
                    └─────────────┘
                           │
                           ▼
┌──────────────────────────────────────────────────────────┐
│   RECEIVE A REQUEST THAT REQUIRES A 3-D MODEL OF A USER'S FACE │
│                         202                                │
└──────────────────────────────────────────────────────────┘
                           │
                           ▼
┌──────────────────────────────────────────────────────────┐
│          CAPTURE A SET OF IMAGES OF THE USER'S FACE        │
│                         204                                │
└──────────────────────────────────────────────────────────┘
                           │
                           ▼
┌──────────────────────────────────────────────────────────┐
│        DETECT FACIAL FEATURES FROM THE CAPTURED IMAGES     │
│                         206                                │
└──────────────────────────────────────────────────────────┘
                           │
                           ▼
┌──────────────────────────────────────────────────────────┐
│            DETERMINE ORIENTATION INFORMATION               │
│            FOR EACH OF THE CAPTURED IMAGES                 │
│                         208                                │
└──────────────────────────────────────────────────────────┘
                           │
                           ▼
┌──────────────────────────────────────────────────────────┐
│        GENERATE A 3-D MODEL OF THE USER'S FACE FROM        │
│   THE DETECTED FEATURES AND THEIR ORIENTATION INFORMATION  │
│                         210                                │
└──────────────────────────────────────────────────────────┘
                           │
                           ▼
┌──────────────────────────────────────────────────────────┐
│          PROCESS THE REQUEST USING THE 3-D MODEL           │
│                         212                                │
└──────────────────────────────────────────────────────────┘
                           │
                           ▼
                    ┌─────────────┐
                    │     END     │
                    └─────────────┘
```

# FIG. 2

2-D IMAGE
300

FEATURE
306

FEATURE
308

FEATURE
302

304

310

312

314

**FIG. 3**

400

START

IS IMAGE-CAPTURE DEVICE READY TO CAPTURE IMAGE? 402

NO → NOTIFY THE USER 404

YES

CAPTURE IMAGE 406

DETERMINE FACIAL FEATURES AND A DEVICE ORIENTATION FOR THE CAPTURED IMAGE 408

IS THE CAPTURED IMAGE SUITABLE FOR DETECTING FEATURES? 410

NO

YES

STORE THE IMAGE, THE DETECTED FEATURES, AND THE DEVICE ORIENTATION 412

DONE? 414

YES → END

NO

MONITOR A CHANGE IN ORIENTATION OF THE IMAGE-CAPTURE DEVICE SINCE A PREVIOUS IMAGE WAS STORED 416

HAS THE DEVICE ORIENTATION CHANGED BY AT LEAST A MINIMUM THRESHOLD? 418

YES

NO

**FIG. 4**

FIG. 5A

FIG. 5B

**FIG. 6**

**FIG. 7**

COMPUTER SYSTEM 800

COMPUTER SYSTEM 802

DISPLAY
810

KEYBOARD
812

POINTING DEVICE
814

PROCESSOR
804

MEMORY
806

STORAGE
DEVICE
808

OPERATING SYSTEM
816

IMAGE-CAPTURE SYSTEM
818

COMMUNICATION MODULE
820

INTERFACE MODULE
822

IMAGE-CAPTURE
MODULE
824

MOTION SENSOR
826

FEATURE-DETECTING
MODULE
828

MODEL-GENERATING
MODULE
830

AUTHENTICATION MODULE
832

DATA
834

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2137670 A2

### Non-patent literature cited in the description

- **DOUGLAS FIDALEO et al.** *Model-Assisted 3D Face Reconstruction from Video,* ISBN 978-3-540-75689-7
- **RITA WONG et al.** *Interactive quality-driven feedback for biometric systems,* ISBN 978-1-4244-7581-0
- **ZHENGYOU ZHANG.** A flexible new technique for camera calibration. *IEEE Transactions on Pattern Analysis and Machine Intelligence,* 2000, vol. 22 (11), 1330-1334